# EUROPÄISCHE PATENTSCHRIFT

(11) **EP 4 441 400 B1**
(45) Veröffentlichungstag und Bekanntmachung des Hinweises auf die Patenterteilung: **01.10.2025**
(21) Anmeldenummer: 22823506.5
(22) Anmeldetag: 30.11.2022
(51) Int. Cl.: F16H 63/34

(54) **SPERRMECHANISMUS, PARKSPERRE UND FAHRZEUG**
LOCKING MECHANISM, PARK LOCK AND VEHICLE
MÉCANISME DE VERROUILLAGE, VERROU DE STATIONNEMENT ET VÉHICULE

(30) Priorität: 02.12.2021 DE 102021213738
(43) Veröffentlichungstag der Anmeldung: 09.10.2024
(73) Patentinhaber: Schaeffler Technologies AG & Co. KG, 91074 Herzogenaurach (DE)
(72) Erfinder: FRITSCH, Karl Martin, 80687 München (DE)
(74) Vertreter: Vitesco Technologies
(86) Internationale Anmeldenummer: PCT/EP2022/083914
(87) Internationale Veröffentlichungsnummer: WO 2023/099598

(56) Entgegenhaltungen:
- DE-A1- 102009 023 498
- DE-A1- 102017 121 007
- DE-A1- 102019 128 563

## Beschreibung

Die Erfindung betrifft einen Spermechanismus, eine Parksperre und ein Fahrzeug.

Aus den Druckschriften DE 102019128563 A1 und DE 102017121007 A1 ist jeweils ein Sperrmechanismus zwischen einem Sperraktuator und einer sperrbaren Welle eines Antriebsstrangs bekannt.

Eine der Erfindung zugrunde liegende Aufgabe ist es, einen kompakten und kostengünstigen Sperrmechanismus, insbesondere für ein Fahrzeug, bereitzustellen.

Eine weitere der Erfindung zugrunde liegende Aufgabe ist es, einen verbesserten Sperrmechanismus, insbesondere für ein Fahrzeug, bereitzustellen.

Diese Aufgabe wird durch einen gemäß Anspruch 1 vorgeschlagenen und unter Schutz gestellten Sperrmechanismus gelöst.

Es wird ein Sperrmechanismus, insbesondere für ein Fahrzeug bzw. eine Parksperre eines Fahrzeugs, zwischen einem Sperraktuator und einem drehbaren, sperrbaren Element mit zumindest einer Ausnehmung bzw. Aussparung vorgeschlagen, in welche ein aktuierbares Formschlusselement des Sperraktuators in einer Axial-Hubbewegung abschnittsweise formschlüssig verfahrbar ist, um das Element zu sperren.

Der Sperraktuator weist dabei außerhalb eines Formschlussbereiches zwischen dem Formschlusselement und dem sperrbaren Element einen Bewegungsfreiheitsgrad für das Formschlusselement relativ bzw. quer zur Axial-Hubbewegung des Formschlusselements sowie bis zu einem zugeordneten Anschlag auf, bis zu dem das Formschlusselement während eines Sperrvorgangs sowie nach Abschluss des Sperrvorgangs auslenkbar bzw. verfahrbar ist.

Durch diesen Bewegungsfreiheitsgrad des Formschlusselements bis zum Anschlag werden einerseits während des Sperrvorgangs Positionierungsungenauigkeiten zwischen dem Formschlusselement und der Ausnehmung ausgeglichen.

Andererseits werden durch diesen Bewegungsfreiheitsgrad des Formschlusselements bis zum Anschlag sowohl während des Sperrvorgangs als auch insbesondere nach Abschluss des Sperrvorgangs dynamische Drehmomentlasten in Gestalt von Drehmomentspitzen eines Antriebsstrangs abgebaut.

Derartige Drehmomentspitzen äußern sich in Bezug auf den Sperrmechanismus in Gestalt von Stoßbelastungen, welche auf den Sperraktuator und dessen Formschlusselement einwirken.

Während des Sperrvorgangs oder insbesondere nach Abschluss des Sperrvorgangs ggf. nicht vollständig bzw. nicht gänzlich über diesen Bewegungsfreiheitsgrad des Formschlusselements bis zum Anschlag abgebaute Drehmomentlasten dieser Art - bzw. Drehmomentrestlasten - nimmt der Anschlag in Gestalt der zuvor genannten Stoßbelastungen auf und leitet diese Stoßbelastungen an einer geeigneten Stelle in eine Peripherie des Sperraktuators ein. Dabei handelt es sich um eine Stelle einer Peripherie eines Antriebsstrangs, insbesondere eines Fahrzeugs.

Über diesen vorgeschlagenen Bewegungsfreiheitsgrad des Sperrmechanismus lassen sich bei entsprechender Auslegung sogar stärkere Positionierungs- bzw. Ausrichtungsungenauigkeiten während des Fügevorgangs bzw. Sperrvorgangs zwischen den Formschluss- bzw. Fügeelementen bauraumsparend, energiesparend und kostengünstig ausgleichen. Und energiesparend insbesondere dann, wenn bei der Fügung nur das Formschlusselement des Sperraktuators und nicht auch noch das zu sperrende Element des Antriebsstrangs und somit auch der Antriebsstrang bewegt wird.

Hinzu kommt, dass insbesondere im gesperrten Zustand des Elements dynamische Belastungsspitzen in Gestalt von Drehmomentspitzen, wie vorhergehend beschrieben, im Idealfall gänzlich über den Bewegungsfreiheitsgrad abgebaut werden, d.h. noch bevor das Formschlusselement den besagten Anschlag erreicht.

Zumindest aber wird eine auf den Formschlussbereich zwischen dem Formschlusselement und dem sperrbaren Element wirkende Stoßbelastung signifikant reduziert und entsprechend auf den Anschlag außerhalb des Formschlussbereiches verlagert.

Der Anschlag kann dabei derart ausgeführt sein, dass er sich zur Kraftaufnahme an einer geeigneten Stelle einer Peripherie eines Antriebsstrangs abstützt, etwa an einem Gehäuse einer Antriebseinheit mit einem Elektromotor und einem (Reduktions-)Getriebe. Dabei kann sich der Anschlag an einem Gehäuseabschnitt eines Elektromotorgehäuses oder eines (Reduktions-)Getriebegehäuses abstützten.

Durch die Bereitstellung bzw. Umsetzung eines Anschlags des Formschlusselements außerhalb des Formschlussbereiches zwischen dem Formschlusselement und dem sperrbaren Element lässt sich vorteilhafterweise ein aktuatorseitig zur Verfügung stehender Bauraum einer Peripherie eines Antriebsstrangs bestmöglich ausnutzen bzw. verwerten.

In einer Ausführung weist das Formschlusselement einen ersten, für den Formschluss fügbaren Formschlusselementabschnitt mit einer Verjüngung im Bereich seines freien Endes sowie einen zweiten, gegenüber dem ersten Formschlusselementabschnitt - bezüglich der Längserstreckung des Formschlusselements bzw. längs zum Formschlusselement - breiteren Formschlusselementabschnitt auf, welcher zum Abbau der zuvor genannten Drehmomentspitzen mit dem außerhalb des Formschlussbereiches vorgesehenen Anschlag zusammenwirkt. Der zweite Formschlusselementabschnitt ist dabei, wenn die Verjüngung des ersten Formschlusselementabschnitts mit der Ausnehmung bzw. Aussparung zusammenwirkt, quer zur Axial-Hubbewegung des Formschlusselements und bis gegen diesen zugeordneten Anschlag des Sperraktuators auslenkbar bzw. verfahrbar.

Diese Auslenkung wird durch ein Spiel zwischen dem zweiten Formschlusselementabschnitt und diesem Anschlag bzw. durch ein Spiel des zweiten Formschlusselementabschnitts relativ zu diesem Anschlag ermöglicht.

Dieses Spiel ermöglicht dabei den zuvor erwähnten Bewegungsfreiheitsgrad außerhalb des Formschlussbereiches zwischen dem Formschlusselement und der Ausnehmung bzw. Aussparung und quer zur Axial-Hubbewegung des Formschlusselements.

In einer weiteren Ausführung ist das Formschlusselement gegen zumindest eine Feder wirkend gegen den Anschlag auslenkbar. Diese Feder kann dabei zwischen dem Formschlusselement bzw. dem zweiten Formschlusselementabschnitt und dem Anschlag angeordnet sein. Im ungefügten Zustand des Formschlusselements, d.h., wenn sich das Formschlusselement außerhalb der Ausnehmung bzw. Aussparung des sperrbaren Elements befindet, wirkt diese mindestens eine Feder rückstellend in eine Ausgangsposition des Formschlusselements relativ zum zuvor beschriebenen Anschlag des Sperraktuators.

In einer weiteren Ausführung ist das Formschlusselement elektrisch aktuierbar. Dabei kann die Axial-Hubbewegung des Formschlusselements bspw. über einen elektromotorisch getriebenen Schraubentrieb umgesetzt werden, welcher eine Drehbewegung eines E-Motors in eine Translations- bzw. Linearbewegung umwandelt. Alternativ dazu kann die Axial-Hubbewegung des Formschlusselements auch mittels einer sog. Tauchspule erzeugt werden, die je nach Ausführung lineare oder rotatorische Bewegungen erzeugen kann.

Es wird ferner eine Parksperre für ein Fahrzeug mit einem Sperrmechanismus der zuvor beschriebenen Art vorgeschlagen und unter Schutz gestellt (Anspruch 7).

Zudem wird ein Fahrzeug mit einer solchen Parksperre oder einem Sperrmechanismus der zuvor beschriebenen Art vorgeschlagen und unter Schutz gestellt (Anspruch 8).

Unter einem Fahrzeug ist dabei jede Art von Fahrzeug bzw. Kraftfahrzeug zu verstehen, welches elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen schematisch:
- Fig. 1: einen Sperrmechanismus;
- Fig. 2: einen vorgeschlagenen, verbesserten Sperrmechanismus;
- Fig. 3: den in Fig. 2 gezeigten Sperrmechanismus in einer weiteren Darstellung; und
- Fig. 4: eine Welle mit Ausnehmungen für einen solchen Sperrmechanismus.

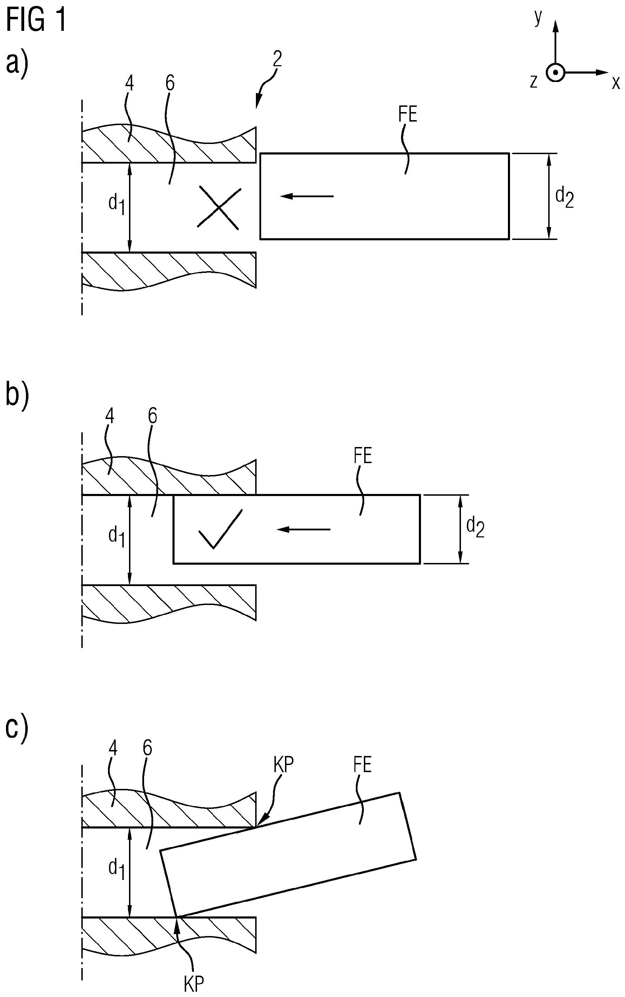

Fig. 1 veranschaulicht einen Sperrmechanismus 2 zwischen einem Sperraktuator und einem drehbaren, sperrbaren Element 4 mit einer Ausnehmung 6, in welche ein elektrisch aktuierbares Formschlusselement FE des Sperraktuators in einer Axial-Hubbewegung abschnittsweise formschlüssig verfahrbar ist, um das Element 4 zu sperren. Dieser Sperrmechanismus liegt dabei insbesondere einer Parksperre eines Fahrzeugs zugrunde.

In einer Parkposition des Fahrzeugs, in welcher das Fahrzeug stillsteht, kann das Formschlusselement FE in die Ausnehmung 6 eingreifen bzw. in die Ausnehmung 6 aktuiert werden, um das Element 4 und somit das Fahrzeug zu versperren bzw. zu blockieren, etwa auf einen Wunsch eines Fahrers hin, der die Parksperre aktiviert.

In einer Ausführung hat das Formschlusselement FE die Gestalt eines Verriegelungsbolzens, mit bspw. kreisrundem Querschnitt, und die Ausnehmung 6 die Gestalt eines Lochs, bspw. kreisrunden Lochs, wobei das Loch als Sack- oder Durchgangsloch ausgebildet sein kann. Das Loch 6 ist dabei in einem sperrbaren Element 4 in Gestalt einer ein Drehmoment übertragenden Welle ausgeformt. Ein solches Loch 6 kann dabei längs oder quer zur Längserstreckung der Welle 4 vorgesehen sein.

Ob eine Sperrung des Elements 4 in einer Parkposition des Fahrzeugs erfolgen kann, hängt von einer Positionierung bzw. Ausrichtung der Ausnehmung 6 relativ zum Formschlusselement FE in dieser Parkposition ab und von einer sog. Toleranzlage, welche Positionierungs- bzw. Ausrichtungsungenauigkeiten zwischen den Fügeelementen FE, 4 ausgleicht.

Fig. 1a) veranschaulicht eine Toleranzlage, welche eine Fügung der Fügeelemente FE, 4 nicht ermöglicht. Die Toleranzlage nach Fig. 1b) hingegen ermöglicht deren Fügung, weil das ihr zugrunde liegende Spiel bzw. die ihr zugrunde liegende Toleranz hinreichend groß gewählt ist. In diesen beiden Fign. 1a) und 1b) ist das Formschlusselement FE jeweils parallel zur Wandung der Ausnehmung 6 ausgerichtet.

Fig. 1c) veranschaulicht eine Fügung, bei welcher das Formschlusselement FE gegenüber der Ausnehmung 6 verkippt ist. Man stelle sich dazu bspw. eine Welle 4 vor, an der ein Loch 6 quer zu ihrer Längserstreckung ausgeformt ist und in welches das Formschlusselement FE eingreift.

Je schlechter bzw. ungenauer eine Ausrichtung der Ausnehmung 6 relativ zum Formschlusselement FE ist, desto größer muss auch das besagte Spiel bzw. die besagte Toleranz zwischen der Abmessung der Ausnehmung 6 (bspw. Durchmesser d₁ des Lochs 6) und der Abmessung des Formschlusselements FE (bspw. Durchmesser d₂ des Verriegelungsbolzens FE) sein, um das Formschlusselement FE in die Ausnehmung 6 verfahren und somit den Formschluss herbeiführen zu können.

Dabei kommt es, je nachdem, wie schlecht oder ungenau diese Ausrichtung ausfällt, zu Fügungen, bei welchen das Formschlusselement FE gegenüber der Ausnehmung 6 mehr oder weniger stark verkippt ist. Entsprechend stellen sich - je nach Verkippungsgrad bzw. je nach Stärke der Verkippung - unterschiedliche Kantenpressungen KP zwischen den Fügeelementen 4, FE ein. Je stärker die Verkippung ausfällt, desto kürzer ragt das Formschlusselements FE in die Ausnehmung 6 hinein und umso stärker stellen sich die besagten Kantenpressungen KP dar.

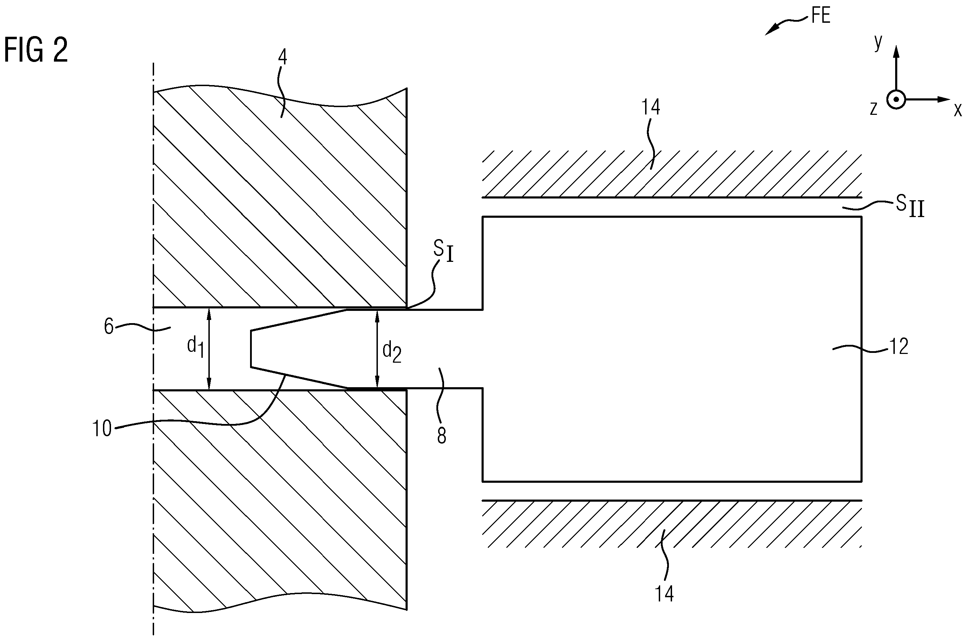

Fig. 2 hingegen veranschaulicht einen verbesserten Sperrmechanismus 2, welcher solche Verkippungen zwischen den Fügeelementen 4, FE ausgleicht bzw. zumindest stark ausgleicht.

Einander entsprechende Merkmale sind durch identische Bezugszeichen identifiziert, so dass auf die vorstehende Beschreibung Bezug genommen und nachfolgend nur auf Unterschiede eingegangen wird.

Der Sperrmechanismus 2 nach Fig. 2 gleicht dabei Positionierungs- bzw. Ausrichtungsungenauigkeiten zwischen den Fügeelementen FE, 4 mittels eines Bewegungsfreiheitsgrades außerhalb eines Formschlussbereiches zwischen dem Formschlusselement FE und dem sperrbaren Element 4 und quer zur Axial-Hubbewegung des Formschlusselements FE aus. Fig. 2 veranschaulicht dabei eine Darstellung ohne Verkippung.

Das Formschlusselement FE weist dabei einen ersten, für den Formschluss fügbaren Formschlusselementabschnitt 8 auf, welcher im Bereich seines freien Endes verjüngt ist bzw. eine Verjüngung 10 aufweist, sowie einen zweiten, sich daran anschließenden und gegenüber dem ersten Formschlusselementabschnitt 8 breiteren Formschlusselementabschnitt 12.

Im Unterschied zur Fig. 1 fällt das Spiel S_{I} zwischen dem Formschlusselement FE und der Ausnehmung 6 deutlich kleiner aus, so dass deren Abmessungen (bzw. deren Durchmesser d₁, d₂ im Falle der zuvor beispielhaft genannten, bezüglich der jeweiligen Querschnitte kreisrunden Ausgestaltungen) vergleichsweise nahe bzw. deutlich näher bei einander liegen. Gezeigt ist auch ein Spiel S_{II} zwischen dem Formschlusselementabschnitt 12 und einem zugeordneten Anschlag 14 des Sperraktuators.

Dieses Spiel S_{II} ermöglicht dabei dem zuvor erwähnten Bewegungsfreiheitsgrad des Sperrmechanismus außerhalb des besagten Formschlussbereiches, über welchen sich das Formschlusselement FE quer zu seiner Axial-Hubbewegung und bis zum besagten Anschlag 14 bewegen kann.

Bei einer entsprechenden Auslegung des Spiels S_{II} können die Abmessungen des ersten Formschlusselementabschnitts 8 und der Ausnehmung 6 (bzw. deren Durchmesser d₁, d₂) sehr nahe beieinander liegen, so dass der Formschlusselementabschnitt 8 und die Ausnehmung 6 eine Spielpassung mit bspw. geringem bis merklichem Spiel darstellen. Die Beschreibung *"geringes bis merkliches Spiel"* ist dem Fachmann bekannt und wird daher nicht näher beschrieben.

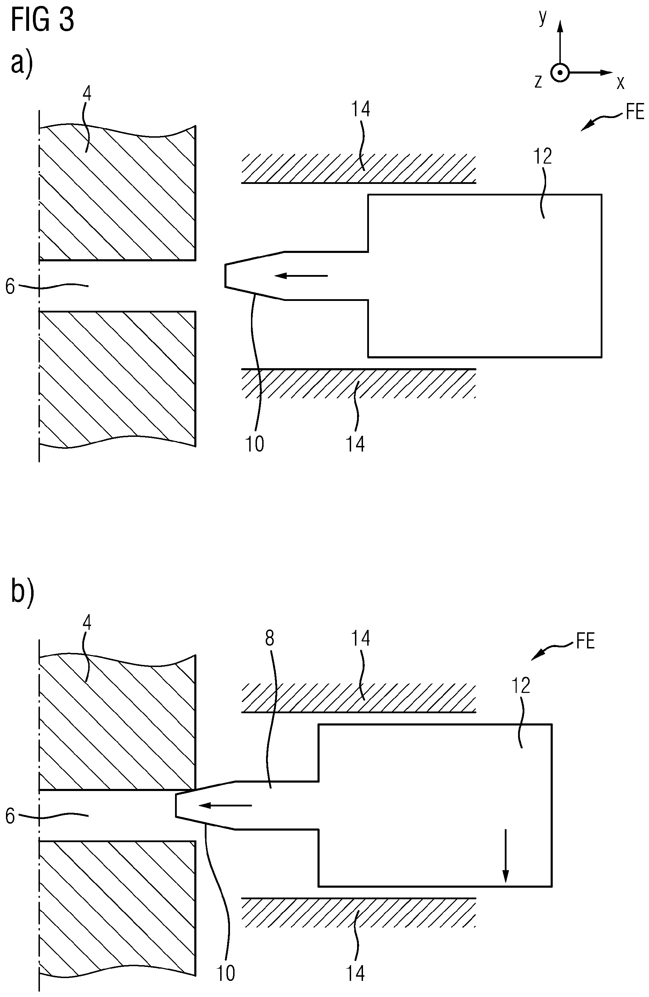

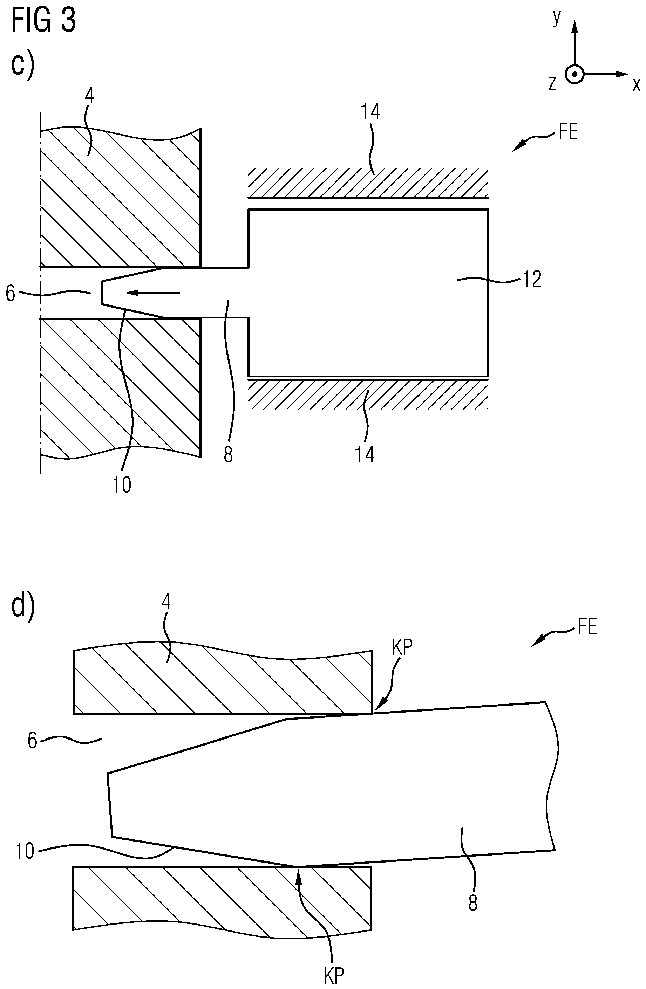

Fig. 3 veranschaulicht eine aktuatorseitige Ausgleichsbewegung des vorgeschlagenen Sperrmechanismus, bei welchem ein Formschlusselement FE eines Sperraktuators quer - bzw. in diesem illustrierten Fall sogar orthogonal - zu einer sperrbaren Welle 4 angeordnet ist (siehe Fign. 3a) bis 3c)). Indem die Verjüngung 10 des Formschlusselementabschnitts 8 mit dem Loch 6 der Welle 4 zusammenwirkt, wird der Formschlusselementabschnitt 12 - und somit das Formschlusselement FE - in Richtung des zugeordneten Anschlags 14, d.h. quer - bzw. in diesem Beispiel orthogonal - zur Axial-Hubbewegung des Formschlusselements FE und dabei maximal bis zum Anschlag 14 ausgelenkt.

Relativ zum Anschlag 14 ist diese Ausgleichsbewegung bzw. Auslenkung des Formschlusselements FE eine Translations- bzw. Linearbewegung, und zwar quer bzw. in Querrichtung Y - Y zur besagten Axial-Hubbewegung des Formschlusselements FE in X - X - Richtung.

Relativ zum Loch 6 hingegen ist diese Ausgleichsbewegung bzw. Auslenkung des Formschlusselements FE eine Translations- bzw. Linearbewegung in sowohl der Längsrichtung X - X als auch der Querrichtung Y - Y. Hinzu kommt aber auch eine Verschwenkung bzw. Verschwenkungsbewegung gegenüber dem Loch 6 (bzw. relativ zur gezeigten Z - Z - Richtung).

Fig. 3d) veranschaulicht eine gegenüber der Fig. 1c) stark reduzierte Verkippung eines gefügten Formschlusselementabschnitts 8 gegenüber dem bzw. relativ zum Loch 6. Damit einher geht auch eine signifikante Reduktion der besagten Kantenpressungen KP.

Fig. 3 veranschaulicht dabei eine Toleranzlage, bei welcher unter Zugrundelegung der beiden zuvor genannten Toleranzen (siehe dazu die beiden gezeigten Spiele S_{I}, S_{II} in Fig. 2) die besagten Positionierungs- bzw. Ausrichtungsungenauigkeiten zwischen den Fügeelementen FE, 4 ausgeglichen werden.

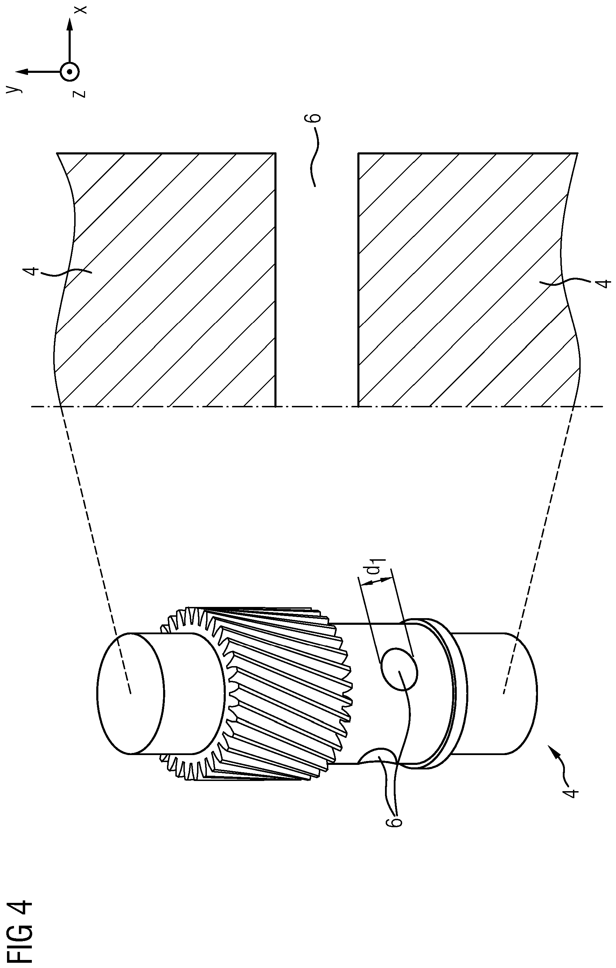

In einer Ausführung gemäß Fig. 4 umfasst eine Welle 4 eine Mehrzahl von Löchern 6, die über den Umfang der Welle 4 gleichmäßig zueinander verteilt und radial in bzw. an der Welle 4 ausgeformt sind, in welche ein Verriegelungsbolzen FE radial zur Welle 4 verfahrbar ist.

In einer weiteren Ausführungsform ist das drehbare und sperrbare Element in Gestalt eines Zahnrades ausgebildet, in dessen Zahnlücken das Formschlusselement eingreifen kann. Alternativ dazu kann auch eine entsprechend ausgebildete Scheibe mit Ausnehmungen bzw. Aussparungen vorgesehen sein. Das Formschlusselement kann dabei längs oder quer zu einer Längsachse des Zahnrades oder der Scheibe angeordnet sein.

Es wird erfindungsgemäß vorgeschlagen, eine Toleranzlage mit einem möglichst kleinen Spiel S_{I} bereitzustellen, um möglichst viele Ausnehmungen 6 am sperrbaren Element 4 erzeugen zu können, über welche ein Fahrzeug jederzeit in einer Parkpositionen gesperrt bzw. blockiert werden kann. Somit ergibt sich z.B. bei einer Welle 4 im Sinne der Fig. 4 eine maximale Anzahl von Löchern 6 entlang ihres Umfangs.

Der schematisch in den Fign. 2 und 3 veranschaulichte Anschlag 14 - außerhalb des besagten Formschlussbereiches - kann dabei ein einzelnes Anschlagselement oder eine Mehrzahl von einzelnen, zueinander - und ggf. beabstandet - angeordneten Anschlagselementen darstellen.

Dieser Anschlag 14 kann dabei vorteilhafterweise den jeweiligen Bauraumverhältnissen in einem Fahrzeug entsprechend an einer geeigneten Stelle einer Peripherie eines Antriebsstrangs angeordnet bzw. vorgesehen sein und zum besagten Formschlussbereich zwischen dem Formschlusselement FE und der Ausnehmung 6 entsprechend beabstandet sein. Dies begünstigt eine Freiheit, den Anschlag 14 den jeweiligen Bauraumverhältnissen in einem Fahrzeug entsprechend auslegen bzw. dimensionieren zu können, um sog. Drehmomentspitzen, die als solche auftreten können, aufnehmen zu können. Eine geeignete Materialauswahl für den Anschlag 14 unterstützt dies zudem. Der Anschlag 14 kann dabei ferner zum Abbau von Drehmomentspitzen mit zumindest einem geeigneten und entsprechend ausgebildeten Dämpfungselement und/oder Federelement kombiniert sein.

Demnach eröffnen die Fign. 2 und 3 bzw. der ihnen zugrunde liegende Sperrmechanismus einen gewissen Gestaltungsspielraum in Bezug auf eine Positionierbarkeit und eine Auslegbarkeit des Anschlags 14 innerhalb eines Fahrzeugs, und zwar den jeweiligen Bauraumverhältnissen im Fahrzeug entsprechend an einer geeigneten Stelle einer Peripherie eines Antriebsstrangs.

Der Formschlusselementabschnitt 8, der über einen zugeordneten - ersten - Anschlag, den die Welle 4 bildet, verriegelt (Verriegelungsfunktion), kann eine auf den Sperrmechanismus wirkende statische Drehmomentlast aufnehmen, etwa bedingt durch eine sich auf einer Straße mit einer Steigung, auf welcher ein Fahrzeug abgestellt ist, einstellende sog. Hangabtriebskraft.

Der Formschlusselementabschnitt 12 hingegen kann eine ggf. nicht vollständig bzw. gänzlich über das Spiel S_{II} bzw. den Bewegungsfreiheitsgrad bis zum zugeordneten zweiten Anschlag 14 abgebaute dynamische Drehmomentlast abbauen, indem er mit dem zugeordneten - zweiten - Anschlag 14 zusammenwirkt (Anschlagsfunktion).

Mit dynamischer Drehmomentlast ist eine kurzfristige, dynamische Drehmomentlast gemeint, die entstehen kann, indem z.B. ein Fahrzeug gegen ein geparktes Fahrzeug anstößt. Bei solch einem Ereignis erzeugt eine extern auf das Fahrzeug einwirkende Kraft ein solch kurzfristiges, dynamisches Drehmoment im Antriebsstrang des Kraftfahrzeugs.

Beim Sperrmechanismus nach Fig. 1 hingegen nimmt das Formschlusselement FE im besagten Formschlussbereich über den zugeordneten Anschlag, welchen die Welle 4 bildet, sowohl statische als auch dynamische sich in einem Antriebsstrang einstellende Drehmomentlasten auf.

Beim nach den Fign. 2 und 3 vorgeschlagenen Sperrmechanismus werden dynamische Belastungsspitzen in Gestalt von Drehmomentspitzen, wie vorhergehend beschrieben, welche sich in Bezug auf den Sperraktuator und dessen Formschlusselement FE in Gestalt von Stoßbelastungen äußern, im Idealfall gänzlich über das besagte Spiel S_{II} aufgenommen.

Ggf. nicht vollständig bzw. gänzlich über das besagte Spiel S_{II} (bzw. den Bewegungsfreiheitsgrad) abgebaute dynamische Drehmomentlasten werden somit abgebaut, indem der zweite Formschlusselementabschnitt 12 mit dem Anschlag 14 zusammenwirkt bzw. gegen diesen anschlägt. Dabei leitet der Anschlag 14 derartige Differenz- bzw. Restlasten an einer geeigneten Stelle in eine Peripherie eines Antriebsstrangs, insbesondere eines Fahrzeugs ein.

Und selbst wenn der zuvor beschriebene Idealfall nicht eintritt, so werden aber - im Unterschied zur Fig. 1 - auf den besagten Formschlussbereich des Sperrmechanismus wirkende Stoßbelastungen zumindest signifikant reduziert und entsprechend auf den Anschlag 14 zur Aufnahme durch die besagte Peripherie verlagert.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, der ausschließlich von den Ansprüchen definiert ist, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Sperrmechanismus (2), zwischen einem Sperraktuator und einem drehbaren, sperrbaren Element (4) mit zumindest einer Ausnehmung (6), in welche ein aktuierbares Formschlusselement (FE) des Sperraktuators in einer Axial-Hubbewegung abschnittsweise formschlüssig verfahrbar ist, um das Element (4) zu sperren, wobei der Sperraktuator außerhalb eines Formschlussbereiches zwischen dem Formschlusselement (FE) und dem sperrbaren Element (4) einen Bewegungsfreiheitsgrad für das Formschlusselement quer zur Axial-Hubbewegung des Formschlusselements (FE) sowie bis zu einem zugeordneten Anschlag (14) aufweist, bis zu dem das Formschlusselement (FE) während eines Sperrvorgangs sowie nach Abschluss des Sperrvorgangs auslenkbar ist, um einerseits Positionierungsungenauigkeiten zwischen dem Formschlusselement (FE) und der Ausnehmung (6) während des Sperrvorgangs auszugleichen und um andererseits dynamische Drehmomentlasten eines Antriebsstrangs während des Sperrvorgangs und nach Abschluss des Sperrvorgangs abzubauen.

2. Sperrmechanismus (2) nach Anspruch 1, wobei das Formschlusselement (FE) einen ersten, für den Formschluss fügbaren Formschlusselementabschnitt (8) mit einer Verjüngung (10) im Bereich seines freien Endes sowie einen zweiten, gegenüber dem ersten Formschlusselementabschnitt (8) und längs zum Formschlusselement (FE) breiteren Formschlusselementabschnitt (12) aufweist, welcher, wenn die Verjüngung (10) mit der Ausnehmung (6) zusammenwirkt, quer zur Axial-Hubbewegung, und zwar innerhalb eines Spiels zwischen dem zweiten Formschlusselementabschnitt (12) und dem Anschlag (14) des Sperraktuators und bis gegen den Anschlag (14) auslenkbar ist.

3. Sperrmechanismus (2) nach Anspruch 1 oder 2, wobei das Formschlusselement (FE) gegen zumindest eine Feder wirkend gegen den Anschlag (14) auslenkbar ist.

4. Sperrmechanismus (2) nach einem der vorhergehenden Ansprüche, wobei sich der Anschlag (14) an einem Gehäuse einer Antriebseinheit abstützt.

5. Sperrmechanismus (2) nach Anspruch 4, wobei sich der Anschlag (14) an einem Gehäuseabschnitt eines Elektromotorgehäuses oder eines (Reduktions-)Getriebegehäuses abstützt.

6. Sperrmechanismus (2) nach einem der vorhergehenden Ansprüche, wobei das Formschlusselement (FE) elektrisch aktuierbar ist.

7. Parksperre mit einem Sperrmechanismus (2) nach einem der Ansprüche 1 bis 6.

8. Fahrzeug mit einer Parksperre nach Anspruch 7 oder einem Sperrmechanismus (2) nach einem der Ansprüche 1 bis 6.

## Claims

1. Locking mechanism (2), between a locking actuator and a rotatable, lockable element (4) with at least one recess (6), into which an actuable form-fitting element (FE) of the locking actuator is movable in an axial stroke movement in portions in a form-fitting manner, in order to lock the element (4), wherein the locking actuator has, outside a form-fitting region between the form-fitting element (FE) and the lockable element (4), a degree of freedom of movement for the form-fitting element transverse to the axial stroke movement of the form-fitting element (FE) as well as up to an assigned stop (14), up to which the form-fitting element (FE) can be deflected during a locking process and after the end of the locking process, in order on the one hand to balance out positioning inaccuracies between the form-fitting element (FE) and the recess (6) during the locking process and on the other hand to dissipate dynamic torque loads of a drivetrain during the locking process and after the end of the locking process.

2. Locking mechanism (2) according to Claim 1, wherein the form-fitting element (FE) has a first form-fitting element portion (8), which can be joined for the form fit, with a tapering (10) in the region of its free end as well as a second form-fitting element portion (12) which is wider in comparison with the first form-fitting element portion (8) and longitudinally to the form-fitting element (FE) and which, if the tapering (10) interacts with the recess (6), can be deflected transversely to the axial stroke movement, and indeed within play between the second form-fitting element portion (12) and the stop (14) of the locking actuator and up to against the stop (14).

3. Locking mechanism (2) according to Claim 1 or 2, wherein the form-fitting element (FE) can be deflected against the stop (14) acting counter to at least one spring.

4. Locking mechanism (2) according to any one of the preceding claims, wherein the stop (14) is supported on a housing of a drive unit.

5. Locking mechanism (2) according to Claim 4, wherein the stop (14) is supported on a housing portion of an electric motor housing or a (reduction) gear housing.

6. Locking mechanism (2) according to any one of the preceding claims, wherein the form-fitting element (FE) is electrically actuable.

7. Parking lock with a locking mechanism (2) according to any one of Claims 1 to 6.

8. Vehicle having a parking lock according to Claim 7 or a locking mechanism (2) according to any one of Claims 1 to 6.

## Revendications

1. Mécanisme de verrouillage (2) entre un actionneur de verrouillage et un élément (4) rotatif verrouillable comprenant au moins un évidement (6) dans lequel un élément de crabotage (FE) actionnable de l'actionneur de verrouillage peut être déplacé avec crabotage par portions dans un mouvement de course axiale afin de verrouiller l'élément (4), l'actionneur de verrouillage possédant, à l'extérieur d'une zone de crabotage entre l'élément de crabotage (FE) et l'élément (4) verrouillable, un degré de liberté de mouvement pour l'élément de crabotage, transversalement par rapport au mouvement de course axiale de l'élément de crabotage (FE) ainsi que jusqu'à une butée (14) associée jusqu'à laquelle l'élément de crabotage (FE) peut être dévié pendant une opération de verrouillage et après la fin de l'opération de verrouillage, afin, d'une part, de compenser les imprécisions de positionnement entre l'élément de crabotage (FE) et l'évidement (6) pendant l'opération de verrouillage et, d'autre part, d'éliminer les charges de couple dynamiques d'une chaîne cinématique pendant l'opération de verrouillage et après la fin de l'opération de verrouillage.

2. Mécanisme de verrouillage (2) selon la revendication 1, l'élément de crabotage (FE) possédant une première portion d'élément de crabotage (8), pouvant être assemblée pour le crabotage, comportant un rétrécissement (10) dans la zone de son extrémité libre, ainsi qu'une deuxième portion d'élément de crabotage (12), plus large par rapport à la première portion d'élément de crabotage (8) et plus large par rapport à l'élément de crabotage (FE), qui, lorsque le rétrécissement (10) coopère avec l'évidement (6), peut être déviée transversalement au mouvement de course axial et ce à l'intérieur d'un jeu entre la deuxième portion d'élément de crabotage (12) et la butée (14) de l'actionneur de verrouillage et jusqu'à la butée (14).

3. Mécanisme de verrouillage (2) selon la revendication 1 ou 2, l'élément de crabotage (FE) pouvant être dévié contre au moins un ressort agissant contre la butée (14).

4. Mécanisme de verrouillage (2) selon l'une des revendications précédentes, la butée (14) prenant appui contre un boîtier d'une unité d'entraînement.

5. Mécanisme de verrouillage (2) selon la revendication 4, la butée (14) prenant appui sur une portion de boîtier d'un boîtier de moteur électrique ou d'un boîtier d'engrenage (réducteur).

6. Mécanisme de verrouillage (2) selon l'une des revendications précédentes, l'élément de crabotage (FE) pouvant être actionné électriquement.

7. Dispositif de verrouillage de stationnement comprenant un mécanisme de verrouillage (2) selon l'une des revendications 1 à 6.

8. Véhicule équipé d'un dispositif de verrouillage de stationnement selon la revendication 7 ou d'un mécanisme de verrouillage (2) selon l'une des revendications 1 à 6.
